# EUROPEAN PATENT APPLICATION

(11) **EP 2 938 089 A1**
(43) Date of publication of application: **28.10.2015**
(21) Application number: 15164649.4
(22) Date of filing: 22.04.2015
(51) Int. Cl.: H04N 21/431, H04N 5/445, H04N 5/45, H04N 21/443, H04N 21/45, H04N 21/475

(54) **DISPLAY DEVICE AND DISPLAYING METHOD THEREOF**

(30) Priority: 22.04.2014 KR 20140048276; 11.07.2014 KR 20140087265
(71) Applicant: Samsung Electronics Co., Ltd, Gyeonggi-do 443-742 (KR)
(72) Inventor: Kim, Moon-soo, Gyeonggi-do (KR); Lim, Yu-mi, Gyeonggi-do (KR)
(74) Representative: Appleyard Lees

(57) **Abstract**

Ae display device including a display (120) configured to display content, an input interface (110) configured to receive a turn-off command and a turn-on command, and a controller (130) configured to, in response to the turn-off command being received, turn off the display, and, in response to the turn-on command being received, turn on the display and control the display to display a screen including a first content that was displayed when the turn-off command was received and a second content different from the first content.

## Description

### CROSS-REFERENCE TO RELATED APPLICATIONS

This application claims priority from Korean Patent Application No. 10-2014-0048276, filed in the Korean Intellectual Property Office on April 22, 2014, and Korean Patent Application No. 10-2014-0087265, filed in the Korean Intellectual Property Office on July 11, 2014, the disclosures of which is incorporated herein by reference in their entireties.

### BACKGROUND

### 1. Field of the Invention

Aspects of the exemplary embodiments relate to a display device and a displaying method thereof, and more particularly, to a display device which displays various content when its state is changed from powered-off to powered-on, and a displaying method thereof.

### 2. Description of the Related Art

With the development of electronic technology, various types of electronic devices have been developed and distributed. One of the representative electronic devices is a display device, such as a television (TV).

A display device displays not only broadcast channel content but also content input from various external devices. In general, when a display device is turned off and then turned on while a predetermined content is displayed, the display device displays the content which was displayed before the display device was turned off.

For example, if a broadcast channel content corresponding to "Channel 100" was displayed before a display device was turned off, the display device displays the broadcast channel content corresponding to "Channel 100" when it is turned on.

Meanwhile, a display device may be used by a plurality of persons in various places such as households, schools, public places, etc. Accordingly, a user who has been using a display device before it is turned off may be different from a user who turns on the display device later. Different users may desire to view different content.

In other words, each user may want to watch different content through a display device. Thus, if a content which was displayed before a display device was turned off is displayed when the display device is turned on, a different user who uses the display device after it is turned on must to perform multiple manipulations to watch a desired content.

### SUMMARY

An aspect of one or more exemplary embodiments relates to a display device which displays various content when the state of the display device is changed from powered-off to powered-on, and a displaying method thereof. According to the present invention there is provided an apparatus and method as set forth in the appended claims. Other features of the invention will be apparent from the dependent claims, and the description which follows.

According to an exemplary embodiment, there is provided a display device including: a display comprising a screen and configured to display content; an input interface configured to receive a turn-off command and a turn-on command; and a controller configured to turn off the display, and, in response to the turn-on command being received, to turn on the display and control the display to display a content on a screen including a first content that was displayed when the turn-off command was received and a second content different from the first content.

The input interface may be further configured to receive a navigation command and a selection command, and the controller may be further configured to control one of the first content and the second content to be highlighted on the screen, and to control the other one of the first content and the second content to be highlighted in response to the navigation command being received, and to control the display to display the highlighted first or second content on an overall area of the screen of the display in response to the selection command being received.

The display device may further include: a storage configured to store information corresponding to content displayed on the display. The controller may be further configured, in response to the turn-off command being received, to control the storage to store information corresponding to the first content displayed on the display when the turn-off command is received.

The controller may be further configured to set a ranking of preferred content with reference to at least one of: respective play-back times, and respective number of playbacks for a plurality of content, and to generate a list of preferred content based on the ranking, and to control the display to display the list of preferred content as the second content.

The controller may be further configured to set a ranking of preferred content with reference to at least one of: respective play-back times, and respective number of playbacks for a plurality of content, and to select at least one content among the plurality of content as the second content based on the ranking.

The controller may be further configured to select at least one content different from the first content from among a plurality of predetermined content as the second content.

The first content and the second content may respectively include one from among: a broadcast channel content, a content played back from a recording medium, an Internet content, a digital versatile disc (DVD) content, a content stored in universal serial bus (USB), and electronic programming guide (EPG) information.

The display device may further include a transceiver configured to communicate with an external device. The controller may be further configured to control the transceiver to transmit a graphic image corresponding to the first content to the external device in response to turning on the display according to the turn-on command.

According to an exemplary embodiment, there is provided a displaying method including displaying a first content on a display of the display device, turning off the display in response to the turn-off command being input while the first content is displayed; and in response to the turn-on command being input, turning on the display and displaying on the screen of the display a content including the first content that was displayed when the turn-off command was input and a second content different from the first content on the display.

The displaying on the screen of the display of said content including the first content and a second content may include highlighting one of the first content and the second content on the screen, highlighting the other one of the first content and the second content in response to a navigation command being input, and displaying, in response to a selection command being input, the highlighted first or second content on an overall area of the display.

The method may further include storing information corresponding to the first content currently displayed on the display in response to the turn-off command being input.

The method may further include setting a ranking of preferred content with reference to at least one of: respective play-back times and respective number of playbacks for a plurality of content, and generating a list of preferred content according to the ranking of preferred content. The displaying of said content on said screen including the first content and the second content may include displaying the list of preferred content as the second content.

The method may further include setting a ranking of preferred content with reference to at least one of respective play-back times and respective number of playbacks for a plurality of content. The displaying of said content on said screen including the first content and the second content may include selecting at least one content among the plurality of contents as the second content based on the ranking.

The displaying of said content on said screen including the first content and the second content may include selecting at least one content different from the first content from among a plurality of predetermined content as the second content.

Each of the first content and the second content may include one from among of: a broadcast channel content, a content played back from a recording medium, an Internet content, a digital versatile disc (DVD) content, a content stored in universal serial bus (USB), and electronic programming guide (EPG) information.

The method may further include communicating with an external device and transmitting, in response to turning on the display according to the turn-on command, a graphic image corresponding to the first content to the external device.

The displaying of said content on said screen including the first content and a second content may include displaying one of the first content and the second content in an enlarged state compared to the other one of the first content and the second content displaying, in response to a navigation command being input, the other one of the first content and the second in the enlarged state and displaying, in response to a selection command being input, the enlarged first or second content on an overall area of the display.

The method may be recorded on a non-transitory computer readable recording medium.

According to an exemplary embodiment, there is provided a display device including a display configured to display content, an input interface configured to receive a power-off command and a power-on command, and a controller configured to turn off the display in response to the power-off command being received, and, in response to the turn-on command being received, to turn on the display and control the display to operate in a multi-view mode and display a plurality of content on the display.

The display device may further include a transceiver configured to communicate with a plurality of external device. The controller may be further configured to control the transceiver to, when operating in the multi-view mode, transmit a graphic image corresponding to one content of the plurality of contents to the external device.

The controller may be further configured to control the transceiver to, when operating in the multi-view mode, transmit a graphic image corresponding to a highlighted content among the plurality of contents to the external device.

### BRIEF DESCRIPTION OF THE DRAWINGS

The above and/or other aspects one or more exemplary embodiment will be more apparent by describing certain exemplary embodiments with reference to the accompanying drawings, in which:
FIG. 1 is a block diagram illustrating a configuration of a display device according to an exemplary embodiment;
FIG. 2 is a block diagram illustrating a configuration of a display device according to another exemplary embodiment;
FIG. 3 is a block diagram illustrating a detailed configuration of a controller and a storage according to an exemplary embodiment;
FIGS. 4A to 4C are views provided to explain a displaying method according to an exemplary embodiment;
FIGS. 5A to 5C are views provided to explain a displaying method according to another exemplary embodiment;
FIGS. 6A to 6C are views provided to explain a displaying method according to another exemplary embodiment;
FIGS. 7A and 7B are views provided to explain a displaying method according to another exemplary embodiment;
FIG. 8 is a view provided to explain a displaying method according to an exemplary embodiment;
FIGS. 9 to 14 are views provided to explain a displaying method according to various exemplary embodiments;
FIGS. 15A and 15B are views provided to explain a displaying method while a mobile device is communicatively connected according to an exemplary embodiment; and
FIG. 16 is a flowchart describing a displaying method according to an exemplary embodiment.

### DETAILED DESCRIPTION

Exemplary embodiments may vary, and may be provided in different exemplary embodiments. Specific exemplary embodiments will be described with reference to accompanying drawings and detailed explanation.

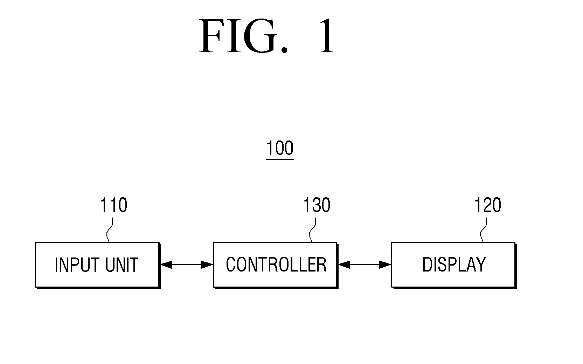

FIG. 1 is a block diagram illustrating a configuration of a display device according to an exemplary embodiment. Referring to FIG. 1, a display device 100 includes an input unit 110, i.e., an input receiver or an input interface, a display 120, and a controller 130. According to FIG. 1, the display device 100 is an apparatus with a display function. A representative display device may be a TV. However, the display device 100 is not limited to a TV, and may be realized as various types of devices such as a monitor, laptop, PC, kiosk, mobile phone, tablet PC, electronic album, etc.

The display device 100 according to an exemplary embodiment may provide a general mode and a multi-view mode. Herein, the general mode refers to a mode where one content is displayed, and the multi-view mode refers to a mode where a plurality of different content is displayed. Displaying two content may be referred to as a duel-view mode, displaying three content may be referred to as a triple-view mode, and displaying four content may be referred to as quadruple-view mode, but in this specification, displaying more than one content will be commonly referred to as a multi-view mode.

The input unit 110 receives various user commands corresponding to operations of the display device 100. In an exemplary embodiment, the input unit 110 receives a turn-off command, i.e., a power-off command, and a turn-on command, i.e., a power-on command.

The display 120 displays content. Here, the content may be one of a broadcast channel content, a content which is reproduced from a recording medium, an Internet content, a digital versatile disc (DVD) content, a content stored in a universal serial bus (USB), and electronic programming guide (EPG) information. However, the content is not limited thereto, and may include any content which can be displayed on the display device 100.

The controller 130 controls overall operations of the display device 100.

Specifically, if a turn-off command is received through the input unit 110 while a first content is displayed, the controller 130 turns off the display 120. Here, the controller may turn off the display 120 only, or turn off the power of the display device 100 including the display 120.

If a turn-on command is received while the display 120 is turned off, the controller 130 turns on the display 120. The controller 130 may display a screen including the first content which was displayed before the display 120 was turned off and a second content which is different from the first content on the display 120.

For example, if a broadcast channel content corresponding to "Channel 100" was displayed before the display 120 was turned off, when the display 120 is turned on, the display 120 may display the broadcast channel content corresponding to "Channel 100" on a first area of the screen as a first content, and display a broadcast channel content corresponding to "Channel 102" on a second area of the screen as a second content. In other words, the controller 130 may operate in a multi-view mode and display two different content on the display 120.

Here, the second content may be a plurality of different content. Accordingly, when the power state of the display 120 is changed from a powered-off state to a powered-on state, the display 120 may display at least two content.

As described with reference to FIG. 1, when the power of the display device 100 is converted from a powered-off state to a powered-on state, the display device 100 may display various content for a user.

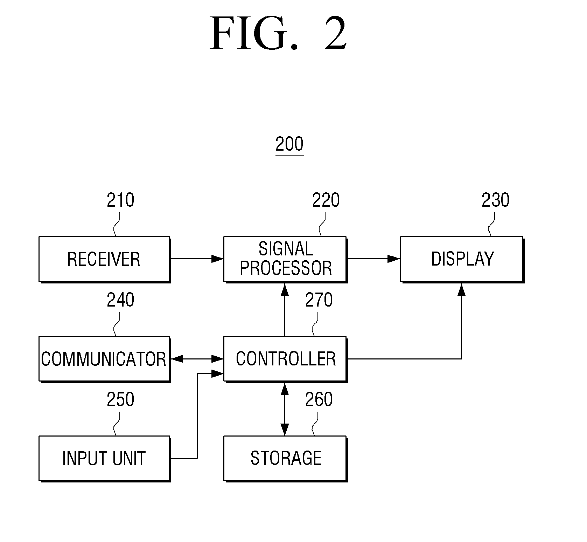

FIG. 2 is a block diagram illustrating a configuration of a display device according to another exemplary embodiment. Referring to FIG. 2, a display device 200 includes a receiver 210, a signal processor 220, a display 230, a communicator 240, i.e., a transceiver, an input unit 250, a storage 260, i.e. a memory, and a controller 270.

The receiver 210 selects a broadcast channel and receives a broadcast signal through the selected broadcast channel. The receiver 210 may include at least one tuner. The broadcast signal received through the receiver 210 is provided to the signal processor 220.

The signal processor 220 processes a broadcast signal and generates a broadcast screen to be displayed, that is, a broadcast channel content. For example, the signal processor 220 may demodulate, equalize, and decode a broadcast signal using a demodulator, an equalizer, and a channel decoder, respectively, and generate a broadcast channel content consisting of a video screen, an audio signal, etc.

The display 230 displays a broadcast channel content generated by the signal processor 220. The display device 200 may further include a speaker for outputting an audio signal.

The communicator 240 is a communication interface which supports a wired or wireless communication function, and may support wireless communication such as WI-FI, WI-FI Direct, Near Field Communication (NFC), Bluetooth, etc., and wired communication via VGA, DVI, HDMI, component cable, etc. Accordingly, the communicator 240 may connect to the Internet, and communicate with an external device such as a mobile phone, a smart phone, a tablet device, Personal Digital Assistant (PDA), etc.

The input unit 250 receives various user commands corresponding to the operations of the display device 200. The input unit 250 may receive a user command input from a remote controller, a user command input to a touch panel, a user command input through buttons on the display device 200, etc. According to an exemplary embodiment, the input unit 250 may receive a turn-off command and a turn-on command, and may also receive a navigation command and a selection command.

The storage 260 stores various programs, data, or information. According to an exemplary embodiment, the storage 260 stores information corresponding to content according to a turn-off operation of the display 100.

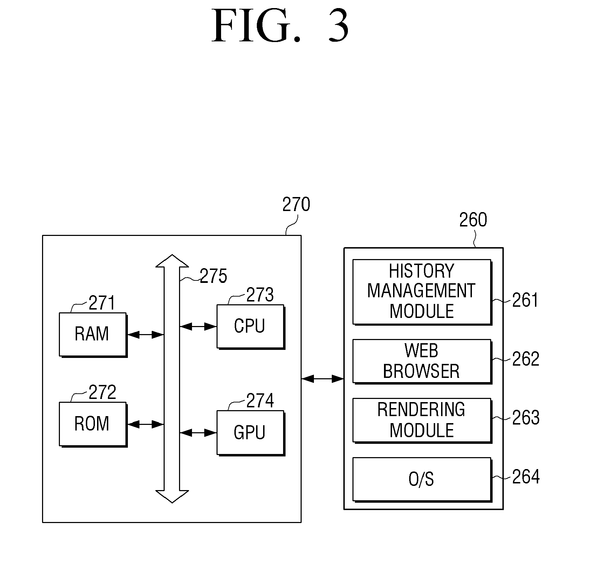

The controller 270 may control the operations of the display device 200 using various programs, data, or information stored in the storage 260. The detailed operations of the controller 270 will be described with reference to FIG. 3.

FIG. 3 is a block diagram illustrating a detailed configuration of the controller 270 and the storage 260. Referring to FIG. 3, the storage 260 may store various software, such as a history management module 261, a web browser 262, a rendering module 263, and an O/S 264.

The history management module 261 is a software module which manages a play-back history of content displayed through the display 230, such as a play-back time and a number of play-backs of each content.

The web browser 262 is a software module which supports the user of the Internet content. Accordingly, the controller 270 may control the display of Internet content on the display 230 using the web browser 262.

The rendering module 263 is a software module for rendering various graphic images to be displayed on the display 230.

The O/S 264 is software responsible for hardware management and basic functionality of the display device 200, such as memory and security. The O/S 264 may control the operations of the display device 200 by driving various modules such as a display driver to drive the display 230, a communication driver to perform communication, an audio driver, a power manager, etc.

The controller 270 may perform various operations using various modules stored in the storage 260. The controller 270 includes a random-access memory (RAM) 271, a read-only memory (ROM) 272, a Control Processing Unit (CPU) 273, and a Graphic Processing Unit (GPU) 274.

The CPU 273 copies various programs stored in the storage 260 into a memory such as the RAM 271 and the ROM 272 and executes the programs. The GPU 274 generates various screens to be displayed on the display device 200 using the rendering module 263.

If a turn-off command is input through the input unit 250 while a first content is displayed on the display 230, the controller 270 turns off the display 230. In this case, the controller 270 may turn off only the display 230 according to the turn-off command, and maintain power to other elements. However, this is only an example, and the controller 270 may turn off power to all or a plurality of elements of the display device 200.

As described above, if a turn-off command is input, the controller 270 stores information corresponding to the first content displayed on the display 230 in the storage 260. For example, if the first content is a broadcast channel content corresponding to "Channel 100," "Channel 100" may be stored in the storage 260.

If a turn-on command is input while the display 230 is turned off, the controller turns on the display 230. The controller 270 operates in a multi-view mode to display a plurality of content. In other words, the GPU 274 may render a graphic image including the first content and a second content using the rendering module 263. Accordingly, the controller 270 may control the first content to be displayed on a first area and a graphic image including the second content to be displayed on a second area on one screen. Here, the first content is the content which was displayed before the display 230 was turned off, and the second content may be a content which is different from the first content.

If the power state of the display 230 is converted from a powered-off state to a powered-on state, the controller 270 may select a content to be displayed as the second content according to various exemplary embodiments.

According to an exemplary embodiment, the controller 270 may prioritize preferred content using a play-back history for each content which is managed by the history management module 261.

The play-back history for each content may be managed based on a play-back time and a number of play-back for each content which is displayed through the display 230. Accordingly, the controller 270 may prioritize preferred content by arranging content in descending order based on one of respective play-back times and respective number of play-backs for each content.

The controller 270 may select at least one content with a high ranking among preferred content as the second content which is to be displayed along with the first content. Preferably, the controller 270 may select a content with the top ranking among preferred content as the second content. However, if the content with the top ranking among preferred content overlaps with the first content, the controller 270 may select a content in the next ranking as the second content.

According to another exemplary embodiment, the controller 270 may generate a list of preferred content using the above-mentioned rankings of the preferred content. The controller 270 may select the list as the second content. In other words, the controller 270 may provide information corresponding to content preferred by a plurality of users by displaying a list of preferred content which have been displayed on the display device 200 extensively or frequently.

According to another exemplary embodiment, the controller 270 may select at least one content which is different from the first content from among a plurality of predetermined content as the second content.

The plurality of content to be selected as the second content may be predetermined by a manager who manages the display device 200. In this case, the manager may set the plurality of content to be selected as the second content in consideration of the location of the display device 200 and the job, age, etc., of users who use the display device 200.

In the above-described exemplary embodiments, each of the first content and the second content may be one of a broadcast channel content, a content played back from a recording medium, an Internet content, a DVD content, a content stored in a USB, and EPG information. In particular, the second content may further include a list of preferred content.

The display device 200 may further include an external device connector which can communicate with various external devices. The display device 200 may communicate with a DVD player providing DVD content and a USB providing USB content through the external device connector. In addition, the display device 200 may communicate with a set-top box (STB) providing the display device 200 with image, voice, Internet web page, game, etc., through the external device connector.

Meanwhile, the controller 270 may highlight one of the first content and the second content on one screen. In other words, the controller 270 may highlight one of the first and second content so as to inform a user that the highlighted content is selectable.

If a navigation command is input while the one of the first content and the second content is highlighted, the controller 270 may highlight the other one of the first content and the second content.

For example, if a navigation command is input while the first content is highlighted, the controller 270 may highlight the second content.

Meanwhile, if a selection command is input while one of the first content and the second content is highlighted, the controller 270 may display the highlighted content on the overall area of the display 230.

For example, if a selection command is input while the second content is highlighted, the controller 270 may display the second content on the overall area of the display 230. In this case, the graphic image of the second content may be rendered by the GPU 274 to fit the size of the screen, and the rendered graphic image may be displayed on the display 230.

Meanwhile, if a turn-on command is input while the communicator 240 is in communication with a mobile device, the controller 270 may transmit a graphic image corresponding to the first content to the mobile device.

Here, if the communicator 240 performs communication with the mobile device via a cable, or the communicator 240 performs wireless communication with the mobile device at the moment the display 230 is turned on, the controller 270 may determine that the communicator 240 is in communication with the mobile device. Accordingly, the controller 270 controls the communicator 240 to transmit a graphic image corresponding to the first content to the mobile device so that the first content is displayed on the mobile device.

However, an exemplary embodiment is not limited to the first content. One of the first content and the second content may be selected arbitrarily, and a graphic image corresponding to the selected content may be transmitted to a mobile device. Accordingly, a user may watch the content also through the user's mobile device.

As described above, the display device 200 may provide a user with various content by displaying various content when it is converted from a powered-off state to a powered-on state. Accordingly, the user may watch a desired content more conveniently and rapidly.

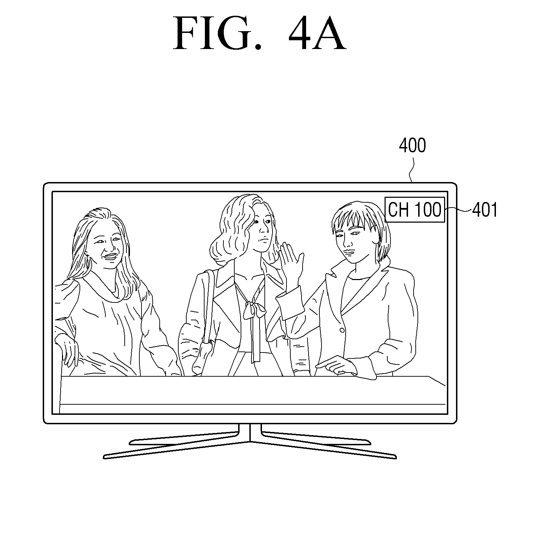

FIGS. 4A to 4C are views provided to explain a displaying method according to an exemplary embodiment. Referring to FIG. 4A, the display device 400 displays the first content in a general mode. In this case, first content identification information 401 corresponding to the first content may be displayed on the screen. For example, if the first content is a broadcast channel content corresponding to "Channel 100," the first content identification information 401 may be displayed as "CH 100" through which a user may recognize that the first content is a broadcast channel content corresponding to "Channel 100."

Meanwhile, if a turn-off command is input while the first content is displayed, the display device is turned off. In this case, the display device 400 may turn off only an element with a display function, that is, a display, or may turn off power to the entire display device 400 including the display.

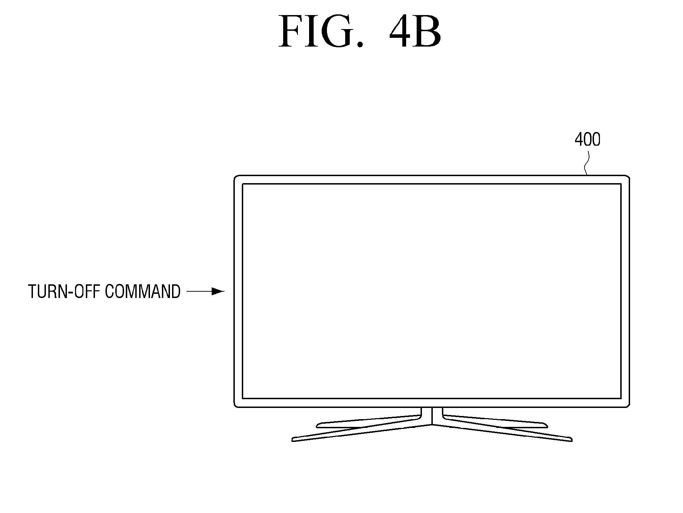

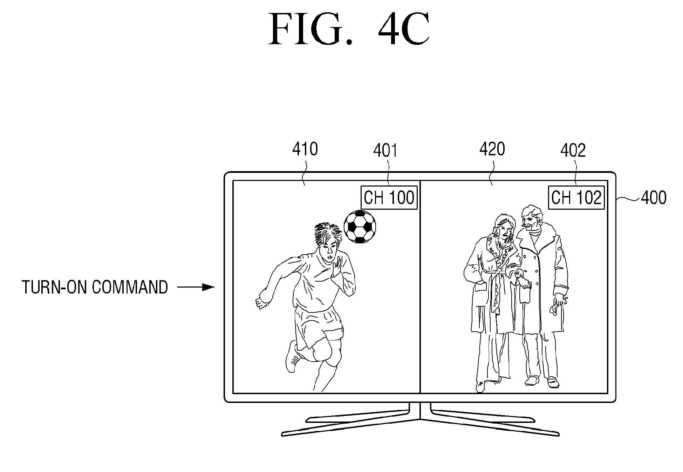

Meanwhile, as illustrated in FIGS. 4B and 4C, if a turn-on command is input while the display device 400 is turned off, the display device 400 operates in a multi-view mode to display a plurality of content on different areas. Subsequently, the first content 410 and the second content 420 may be displayed on different areas on one screen.

Here, the first content 410 is a broadcast channel content corresponding to "Channel 100", which was displayed before the display device 400 was turned off. The second content 420 may be a broadcast channel content corresponding to "Channel 102" which is different from the first content.

In order to differentiate content displayed in each area, the first content 410 may include the first content identification information 401, and the second content 420 may include the second content identification information 402.

As illustrated in FIG. 4C, if the display device 400 is converted from a powered-off state to a powered-on state, the broadcast channel content corresponding to "Channel 102" may be displayed in addition to the broadcast channel content corresponding to "Channel 100" which was displayed prior to the powered-off state, thereby providing various broadcast channel content to a user.

FIG. 4C illustrates an exemplary embodiment where broadcast channel content corresponding to two channels is displayed, but more broadcast channel content may be displayed according to a number of channels that the signal receiver 210 may select or receive.

Accordingly, when the display device 400 which has been in a turned-off state is turned on, a user may view various broadcast channel content on one screen and select a desired broadcast channel content more conveniently and rapidly.

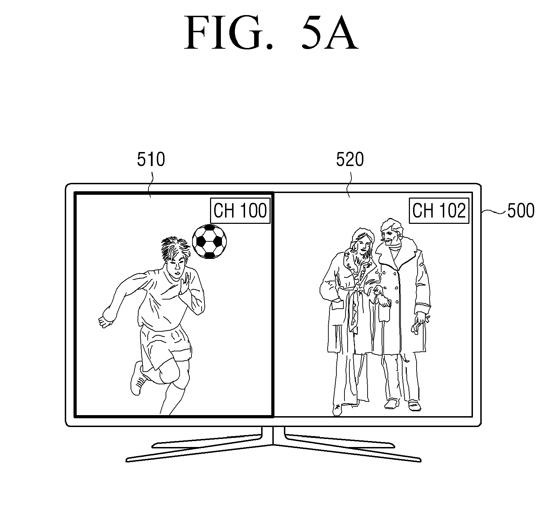

FIGS. 5A to 5C are views provided to explain a displaying method according to another exemplary embodiment.

According to the method illustrated in FIGS. 5A to 5C, when a first content 510 and a second content 520 are displayed on the screen of a display device 500, as illustrated in FIG. 5A, the display device 500 may highlight the first content 510. In other words, the display device 500 may highlight the first content 510 to indicate that the first content 510 is in a selectable state.

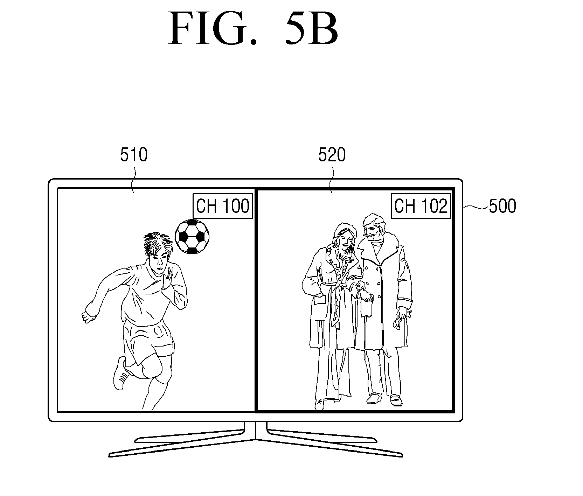

If a navigation command is input, the display device 500 highlights the second content 520. Here, the navigation command may be a movement command input through a remote controller, a touch panel, or a button. Accordingly, the display device 500 may change a highlighted content from the first content 510 to the second content 520 as illustrated in FIG. 5B. Thus, the second content 520 may be highlighted, indicating that the second content 520 is in a selectable state.

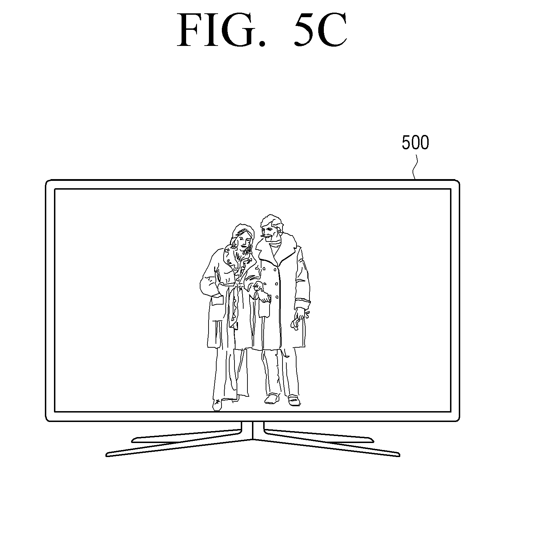

As illustrated in FIG. 5C, if a selection command is input while the second content 520 is highlighted, the display device 500 may display the second content 520 on a full screen of the display device 500. Accordingly, a user may select a desired content and watch the content on the full screen.

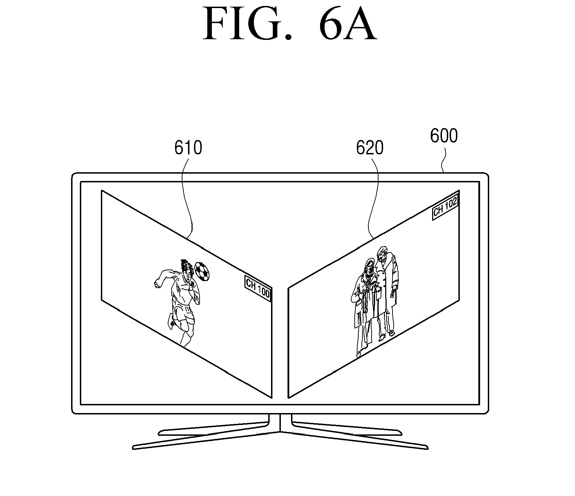

FIGS. 6A to 6C are views provided to explain a displaying method according to another exemplary embodiment.

Referring to FIG. 6A, if a display device 600 is converted from a powered-off state to a powered-on state, the display device 600 operates in a multi-view mode. Subsequently, a first content 610 and a second content 620, which are displayed in different areas on a two-dimensional screen, may be displayed in a three-dimensional screen. In other words, as illustrated in FIG. 6A, the two-dimensional screen of the first content 610 and the second content 620 may be displayed as if a user views a cube such as a square column constituting two sides from top.

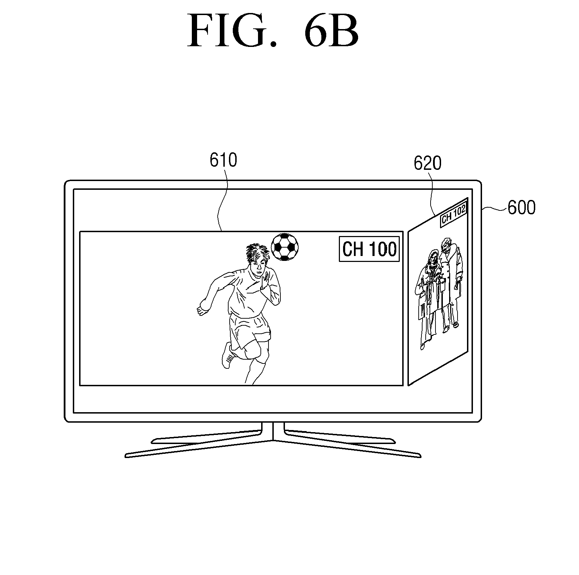

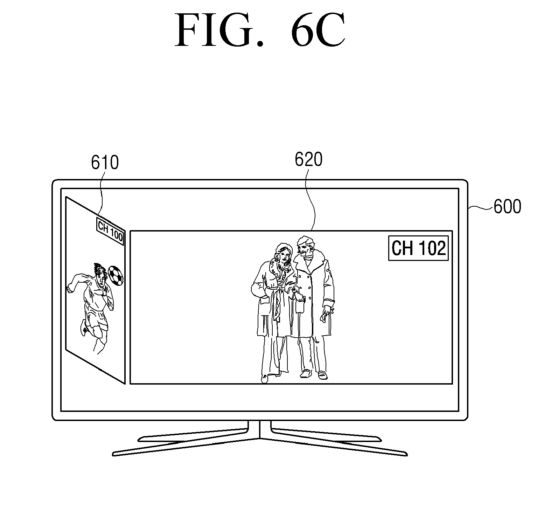

Referring to FIGS. 6B and 6C, if a navigation command is input, the display device 600 may display the first content 610 and the second content 620 in the form of a cube such that one of the first content 610 and the second content 620 is displayed on the front and the other content is displayed on the side. Specifically, if a navigation command such as a command to move in the left direction is input through a remote controller, a touch, or a button, as illustrated in FIG. 6B, the display device 600 may convert the view point of the cube such that the first content 610 is displayed on the front. In other words, the display device 600 may display the first content 610 on the front side to indicate that the first content 610 is in a selectable state. Alternatively, if an adjust command to move in the right direction is input, as illustrated in FIG. 6C, the display device 600 may convert the view point of the cube such that the second content 620 is displayed on the front, indicating that the second content 620 is in a selectable state.

If a selection command is input when the second content 620 is displayed on the front, the display device 600 may display the second content 620 on a full screen. Accordingly, a user may select a desired content and watch the content on the full screen.

In the above description regarding FIGS. 6A to 6C, the display device displays two content in a multi-view mode, but this is only an example. Three or more content may be displayed on the sides of a virtual cube.

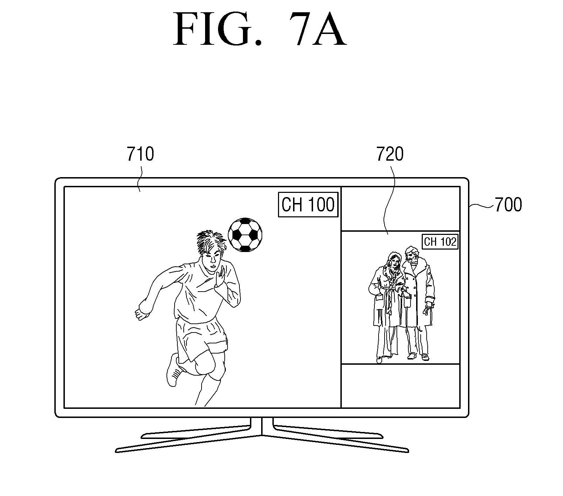

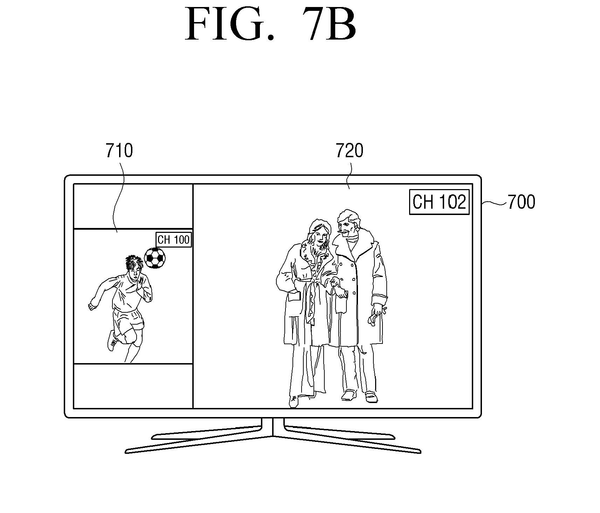

FIGS. 7A and 7B are views provided to explain a displaying method according to another exemplary embodiment.

Referring to FIGS. 7A and 7B, if the power state of a display device 700 is converted from a powered-off state to a powered-on state, the display device 700 operates in a multi-view mode. One of a first content 710 and a second content 720 which are displayed on different areas may be displayed larger than the other content on the screen of the display device 700. Specifically, if a navigation command such as a command to move in the right direction is input to the display device 700 through a remote controller, a touch panel, or a button, as illustrated in FIG. 7A, the first content 710 may be displayed larger than the second content 720 on the screen of the display device 700, indicating that the first content 710 is in a selectable state. Alternatively, if a navigation command such as a command to move in the left direction is input to the display device 700 through the remote controller, the touch panel, or the button, as illustrated in FIG. 7B, the second content 720 may be displayed larger than the first content 710 on the screen of the display device 700, indicating that the second content 720 is in a selectable state.

If the second content 720 is displayed larger than the first content 710 and a selection command is input, the second content 720 may be displayed on a full screen. Accordingly, a user may select a content that he or she wishes to watch and watch the content on the full screen.

In the above description regarding FIGS. 7A and 7B, the display device displays two content in a multi-view mode, but this is only an example. Three or more content may be configured to be arranged in a vertical row or a plurality of columns and rows, and the screen may be converted accordingly.

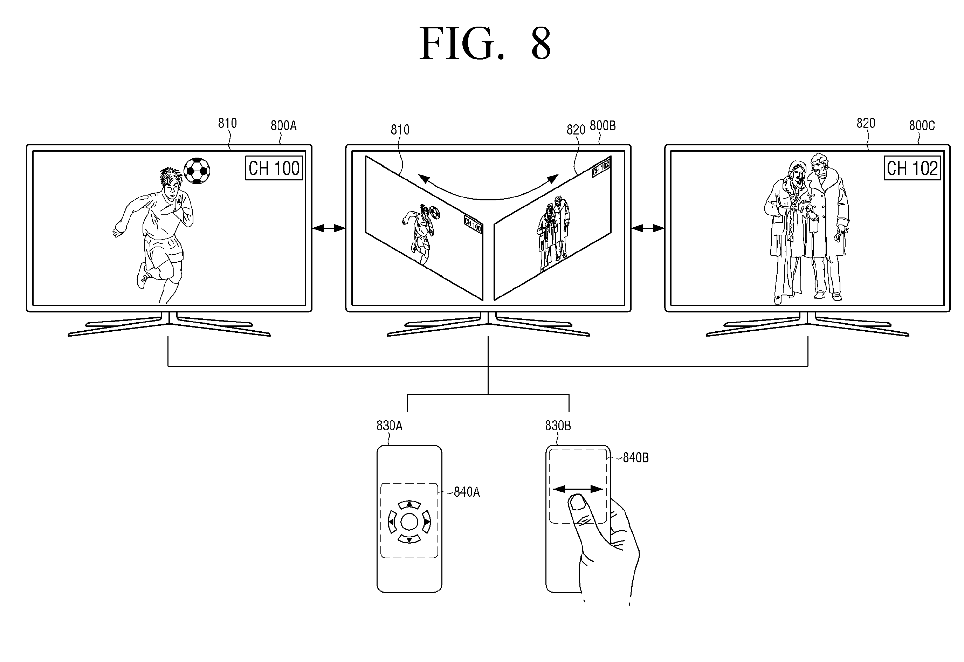

FIG. 8 is a view provided to explain a displaying method according to an exemplary embodiment.

FIG. 8 illustrates a first content 810 is displayed on the full screen of a display device 800A, the first content 810 and a second content 820 are displayed on different areas on the screen of the display device 800B, and the second content 820 is displayed on the full screen of the display device 800C. In addition, FIG. 8 illustrates two remote controllers 830A and 830B which may input a command to the display device 800. Specifically, if the power state of the display device 800 is converted from a powered-off state to a powered-on state, the display device 800 operates in a multi-view mode. Subsequently, a user may input a movement command to the display device 800 using left/right/up/down buttons 840A of the remote controller 830A. In addition, a user may input a movement command to the display device 800 using a drag in a certain direction on a touch area 840B of the touch remote controller 830B. The display device 800 may display one of the first content 810 and the second content 820 which are displayed on different areas on the screen of the display device 800 on full screen according to the movement command input from the remote controller 830A including an analog button or the touch remote controller 830B.

Meanwhile, when a user converts the first content 810 to the second content 820 or the second content 820 to the first content 810, using the remote controller 830A or the touch remote controller 830B, the display device 800 may display a multi-view mode where a plurality of content is displayed on different areas while the content are converted. For example, as illustrated in FIG. 8, the first content 810 and the second content 820 are displayed on two sides of a virtual cube in the process of conversion, and the content displayed on the display device 800 may be changed. In particular, when the touch remote controller 830B is used, the degree of motion 800B where the cube is rotated may be according to the direction of degree of a user's drag on the touch area 840B of the touch remote controller 830B.

Accordingly, when the display device 800, which has been turned off, is turned on, a user may check various broadcast channel content with a simple manipulation, and select a broadcast content that he or she wants to watch more conveniently and rapidly. In addition, a user may not experience inconvenience due to a flicking screen of the display device 800 when the content is converted.

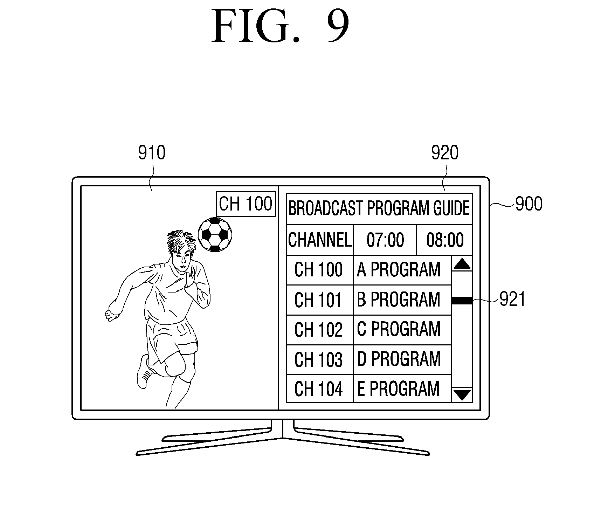

FIGS. 9 to 12 are views provided to explain a method of displaying a content. Referring to FIG. 9, if a turn-on command is input when a display device 900 is in a powered-off state, the display device 900 may operate in a multi-view mode, displaying a first content 910 and a second content 920 on one screen.

Here, the first content 910 is the content which was displayed before the display device was turned off, and may be a broadcast channel content corresponding to "Channel 100." The second content 920 is a content different from the first content 910, and may be broadcast program guide information (for example, Electronic Program Guide (EPG)). According to an exemplary embodiment, when the power state of the display device 900 is converted from a powered-off state to a powered-on state, broadcast program guide information may be predetermined as the second content 920 which is displayed along with the first content 910.

In general, users tend to use the functions of a TV which are related to a broadcast channel content when using the display device 900 and thus, it is highly likely that the users may use other broadcast channel content in addition to "Channel 100." Accordingly, as illustrated in FIG. 9, the display device 900 may select and display broadcast program guide information as the second content 920.

A user may check which channel broadcasts which program through the second content 920. Thus, if the content he or she wishes to watch is not the first content 910, the user may input a broadcast channel number that the user wishes to watch. Accordingly, the user may select a broadcast channel content that he or she wishes to watch more conveniently and rapidly. In this case, if the broadcast program guide includes a lot of channels, the user may select a channel by moving an up/down direction key or a scroll bar 921.

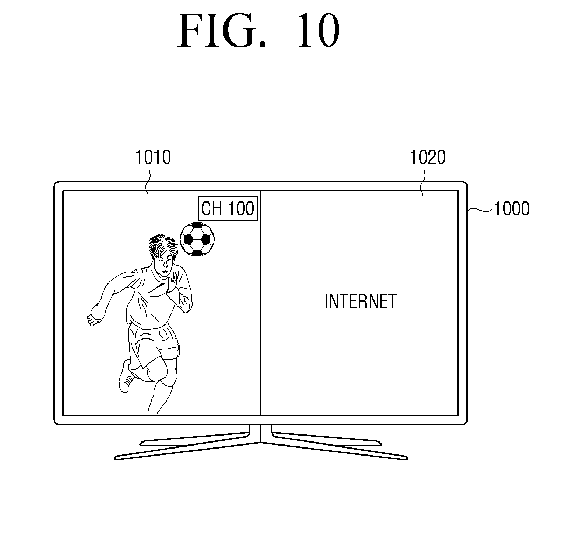

Referring to FIG. 10, when the power state is converted from a powered-off state to a powered-on state, a display device 1000 operates in a multi-view mode and thus, a first content 1010 and a second content 1020 can be displayed on one screen.

Here, the first content 1010 is a content which was displayed before the display device 1000 was turned off, and may be a broadcast channel content corresponding to "Channel 100." The second content 1020 is a content which is different from the first content 1010, and may be Internet content. According to an exemplary embodiment, when the power state of the display device 100 is converted from a powered-off state to a powered-on state, Internet content may the second content 1020 which is displayed along with the first content 1010. The Internet content may be preset as the second content 1020.

Depending on the location of the display device 100, usability of an Internet content can be improved. For example, if the display device 100 is located at a building in a tourist destination (for example, a tourist information center), a tourist may use the display device 1000 frequently. Accordingly, as illustrated in FIG. 10, the display device 1000 may select and display an Internet content as the second content 1020.

Although a tourist information center is described above, this is only an example, but a display device which is located at a place like a school and a research center where students and researchers search information frequently may also select an Internet content as the second content.

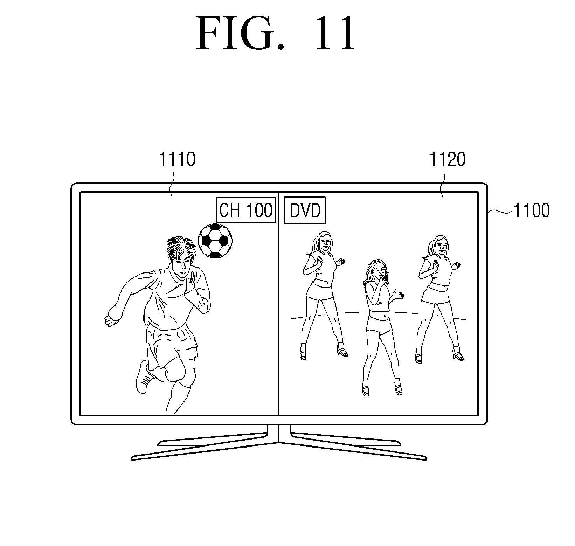

Referring to FIG. 11, when the power state is converted from a powered-off state to a powered-on state, a display device 1100 operates in a multi-view mode and thus, a first content 1110 and a second content 1120 can be displayed on one screen.

Here, the first content 1110 is a content which was displayed before the display device 1100 was turned off, and may be a broadcast channel content corresponding to "Channel 100." The second content 1120 is a content which is different from the first content 1110, and may be a DVD content.

If a DVD player is built in the display device 1100 or a DVD player is connected to the display device 1100, a DVD content may be preset as the second content 1120.

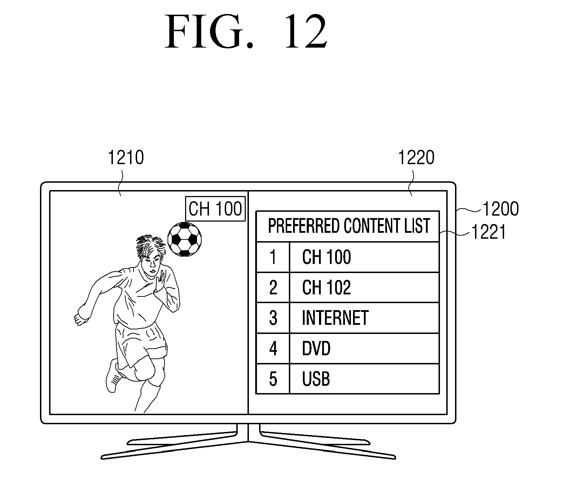

Meanwhile, referring to FIG. 12, when the power state is converted from a powered-off state to a powered-on state, a display device 1200 operates in a multi-view mode and thus, a first content 1210 and a second content 1220 can be displayed on one screen.

Here, the first content 1210 is a content which was displayed before the display device 1200 was turned off, and may be a broadcast channel content corresponding to "Channel 100." The second content 1220 is a content which is different from the first content 1210, and may be a list of preferred content 1221. According to an exemplary embodiment, when the power state of the display device 1200 is converted from a powered-off state to a powered-on state, the preferred content list 1221 may be the second content 1220 which is displayed along with the first content 1210. The preferred content list 1221 may be preset as the second content 1220.

The preferred content list 1221 may be a list including a ranking of preferred content based on one of a play-back time and a number of play-back(s) for each content displayed on the display device 1200.

For example, the display device 1200 may add up the number of playback(s) for each content and set the ranking of preferred content such that a content which has been played back most frequently may top the list. In other words, as illustrated in FIG. 12, the highest ranking in the preferred content list is "Channel 100," followed by "Channel 102," an Internet content, a DVD content, and a USB content.

A user may check the content which have been played back frequently in the display device 1200 through the preferred content list 1221, and select a content that he or she wishes to watch from the preferred content list 1221 conveniently.

FIGS. 9 to 12 illustrate that broadcast program information, a broadcast channel content, an Internet content, a DVD content, or a preferred content list may be predetermined as the second content 920, 1020, 1120, and 1220, but these are only examples. In other words, a plurality of content instead of a single content can be selected as the second content 920, 1020, 1120, and 1220.

For example, referring back to FIG. 10, if an Internet content was displayed before the display apparatus 1000 was turned off, the first content 1010 may be the internet content. In this case, the first content 1010 may overlap with the second content 1020 and thus, a plurality of content may be selected as the second content 1020.

If a broadcast content corresponding to "Channel 102," an Internet content, and a USB content are predetermined as content which can be selected as the second content 1020, the display device 1000 may select the broadcast content corresponding to "Channel 102" or the USB content, but not the Internet content, from among the three content as the second content 1020.

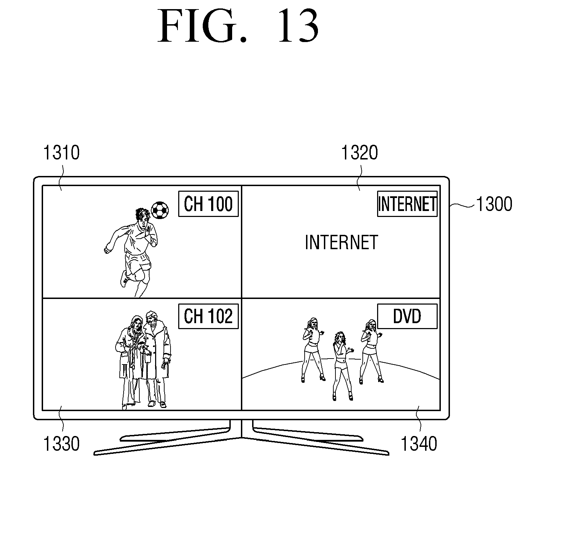

FIG. 13 is a view provided to explain a method of displaying four content.

Referring to FIG. 13, if a turn-on command is input while a display device 1300 is turned off, the display device 1300 operates in a multi-view mode, displaying a first content 1310 and three second content 1320, 1330, and 1340 on one screen.

Here, the first content 1310 is a content which was displayed before the display device 1300 was turned off. The three of the second content 1320, 1330, and 1340 are different content from the first content 1310, and may be different from one another.

For example, the first content 1310 which is a broadcast channel content corresponding to "Channel 100" may be displayed on the upper left side, and the second content 1320 which is an Internet content may be displayed on the upper right side. In addition, another second content 1330 which is a broadcast channel content may be displayed on the lower left side, and the other second content 1340 which is a DVD content may be displayed on the lower right side.

On the screen of the display device 1300, the areas (or positions) where the first content 1310 and three of the second content 1320, 1330, and 1340 are displayed are not limited to those illustrated in FIG. 13. The method of selecting the second content from among various content has been described above in detail, so further description will not be provided.

As illustrated in FIG. 13, when the power state is converted from a powered-off state to a powered-on state, the display device 1300 may display four content 1310, 1320, 1330, and 1340 in a multi-view mode. Accordingly, a user may check various content at once when the display device 1300 is turned on, and select a content that he or she wishes to watch.

In FIG. 13, when a powered-off state is converted to a powered-on state, the display device 1300 displays four content 1310, 1320, 1330, and 1340, but this is merely an example, and the number of content to be displayed is not limited thereto.

For example, if the display device 1300 has a large screen, for example, more than 100 inches, even if the screen is divided into more than four areas, the visibility and readability of content displayed in each area may be greater than a certain level. Accordingly, more than four content can be displayed according to the size of the display device 1300.

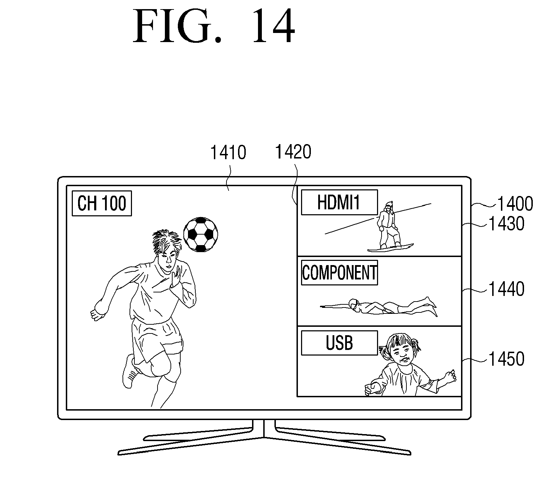

FIG. 14 is a view provided to explain another method of displaying four content.

Referring to FIG. 14, if a turn-on command is input while a display device 1400 is turned off, the display device 1400 operates in a multi-view mode, displaying a first content 1410 and three of second content 1430, 1440, and 1450 on one screen.

Here, the first content 1410 is a content which was displayed before the display device 1400 was turned off. The three of the second content 1430, 1440, and 1450 are content which are different from the first content 1410, and may be different from one another.

Specifically, the first content 1410 may be a broadcast channel content which had been watched most recently before the display device 1400 was turned off. The three of the second content 1430, 1440, and 1450 may be content provided by external devices which are connected to the display device 1400 in different methods, and may be content which was displayed most recently before the display device 1400 was turned off.

For example, the first content 1310 may be a broadcast channel content corresponding to "Channel 100" which had been watched most recently before the display device 1400 was turned off, and may be displayed on a larger screen. The second content 1430 may be a content transmitted from an external device which is connected to a first High-Definition Multimedia Interface (HDMI) port of the display device 1400 via an HDMI cable, and may be displayed on an upper side of an area 1420 where content of connected external devices on the right side of the screen is displayed. Another second content 1440 may be a content transmitted from an external device connected to a component port of the display device 1400 via a component cable, and may be displayed on a middle of the area 1420 where content of connected external devices on the right side of the screen is displayed. The other second content 1450 may be a content transmitted from an external device connected to a USB port of the display device 1400 via a USB cable, and may be displayed on a lower side of the area 1420 where content of connected external devices on the right side of the screen is displayed.

On the screen of the display device 1400, the areas (or positions) where the first content 1410 and three of the second content 1430, 1440, and 1450 are displayed are not limited to those illustrated in FIG. 14. The method of selecting the second content from among various content has been described above in detail, so further description will not be provided.

As illustrated in FIG. 14, when the power state is converted from a powered-off state to a powered-on state, the display device 1400 may display four content 1410, 1430, 1440, and 1450 in a multi-view mode. Accordingly, a user may check various content at once when the display device 1400 is turned on, and select a content that he or she wishes to watch.

Meanwhile, in FIG. 14, when a powered-off state is converted to a powered-on state, the display device 1400 displays four content 1410, 1430, 1440, and 1450, but the number of content to be displayed is not limited thereto.

For example, if the display device 1400 has a large screen, for example, more than 100 inches, even if the area 1420 where a content of an external device connected to the display device 100 is displayed is divided into more than three areas, the visibility and readability of content displayed in the area 1420 may be higher than a certain level. In addition, according to a number of external devices connected to the display device 1400, the area 1420 where a content of a connected external device is displayed may be enlarged or shrunk. Accordingly, according to the screen size of the display device 1400 and the number of external devices connected to the display device 1400, more than three second content can be displayed.

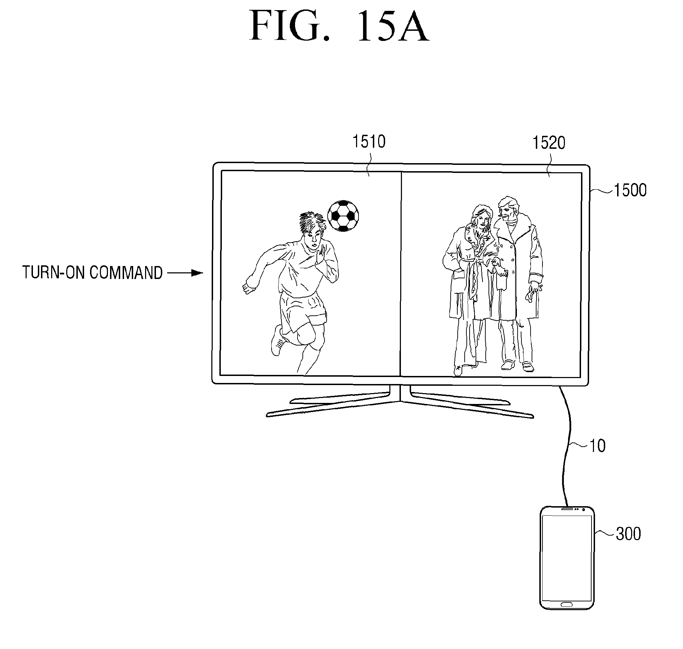

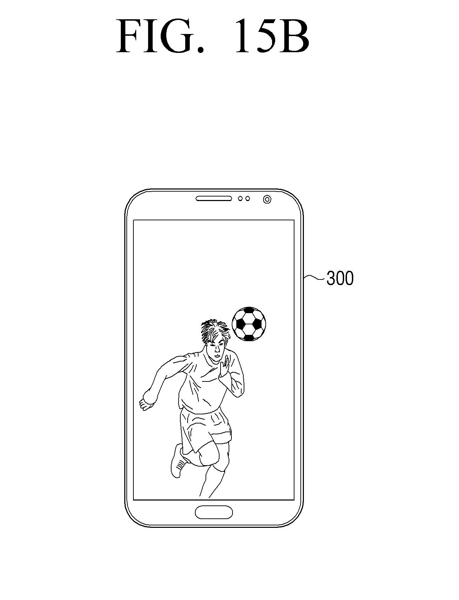

FIGS. 15A and 15B are views provided to explain a displaying method while a mobile device is communicatively connected. Referring to FIG. 15A, the power state of a display device 1500 is converted from a powered-off state to a powered-on state according to a turn-on command, and the display includes a first content 1510 and a second content 1520.

Here, the first content 1510 is a broadcast channel content corresponding to "Channel 100" which was displayed before the display device 1500 was turned off, and the second content 1520 is a broadcast channel content corresponding to "Channel 102" which is different from "Channel 100."

Meanwhile, the display device 1500 may communicate with a mobile device 300 through a wired or wireless communication method. As illustrated in FIG. 15A, if a turn-on command is input while the display device 1500 is connected to the mobile device 300 via a cable 10, the display device 1500 may transmit a graphic image corresponding to the first content 1510 to the mobile device 300. Accordingly, as illustrated in FIG. 15B, the mobile device 300 may display the graphic image corresponding to the first content 1510 on a screen of the mobile device 300.

FIG. 15B illustrates a graphic image corresponding to the first content 1510 being displayed on the mobile device 300, but this is only an example. In other words, a graphic image corresponding to the second content 1510 may also be transmitted to the mobile device 300.

If a movement command is input while the mobile device 300 displays a graphic image corresponding to the first content 1510, the mobile device 300 may transmit a request for a graphic image corresponding to another content, that is, the second content 1520, to the display device 1500. In response to the request, the display device 1500 may transmit a graphic image corresponding to the second content 1520 to the mobile device 300. Accordingly, the mobile device 300 may display the graphic image corresponding to the second content 1520.

According to FIGS. 15A and 15B, if the display device 1500 is located in a public place, a user of the mobile device 300 may watch a content that he or she wishes to watch out of the two content 1510 and 1520 displayed on the display device 1500 through the mobile device 300. Although a mobile device 300 is described, this is merely an example, and exemplary embodiments of a display device 1500 may transmit graphic images to a plurality of different external devices.

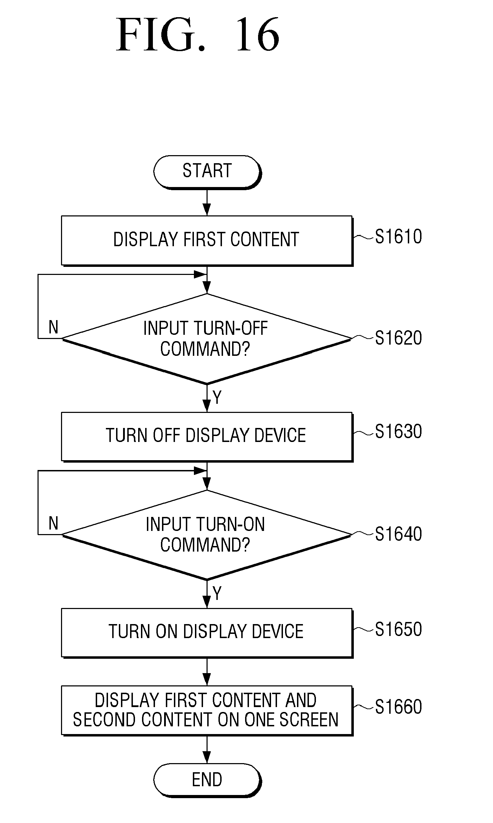

FIG. 16 is a flowchart describing a displaying method according to an exemplary embodiment. FIG. 16 relates to a displaying method, and the method may be performed by a display device 100 or 200 illustrated in FIG. 1 and FIG. 2, respectively.

The display device displays a first content (S1610). Here, the first content may be one of a broadcast channel content, a content which is played back from a recording medium, an Internet content, a DVD content, a content stored in a USB, and EPG information.

If a turn-off command is input while the first content is displayed on the screen (S1620), the display device turns off power to the display (S1630). If such a turn-off command is input, the display device may store information corresponding to the first content which was displayed.

Meanwhile, if a turn-on command is input while the display device is turned off (S1640), the display device may turn on power to the display (S1650).

When the display device is turned on, a first content and a second content are displayed on one screen (S1660). Specifically, when a turn-on command is input in the step of S1620, the first content which was displayed on the display device may be displayed on the first area, and the second content which is different from the first content may be displayed on the second area. Here, the second content may be, for example, a broadcast channel content, a content which is played back from a recording medium, an Internet content, a DVD content, a content stored in a USB, EPG information, a preferred content list which is generated according to the ranking of preferred content, etc.

The displaying method according to the above-described various exemplary embodiments may be coded as software and stored in a non-transitory readable medium. Such a non-transitory readable medium may be mounted in various devices and used therein.

For example, a program code for performing the steps of displaying the first content, turning off a display in response to a turn-off command being input, and turning on the display in response to a turn-on command being input and displaying a screen including the first content and the second content which is different from the first content may be stored in a non-transitory readable medium and mounted in an image forming apparatus.

The non-transitory recordable medium refers to a medium which may store data semi-permanently rather than storing data for a short time such as a register, a cache, and a memory and may be readable by an apparatus. For example, the non-transitory readable medium may be CD, DVD, hard disk, Blu-ray disk, USB, memory card, ROM, etc.

The foregoing exemplary embodiments and advantages are merely exemplary and are not to be construed as limiting the present invention. The present teaching can be readily applied to other types of apparatuses. Also, the description of one or more exemplary embodiments is intended to be illustrative, and not to limit the scope of the claims, and many alternatives, modifications, and variations will be apparent to those skilled in the art.

## Claims

1. A display device, comprising:
a display (120) comprising a screen and configured to display content;
an input interface (110) configured to receive a turn-off command and a turn-on command; and
a controller (130) configured to turn off the display in response to the turn-off command being received, and, in response to the turn-on command being received, to turn on the display and to control the display to display a content on said screen including a first content that was displayed when the turn-off command was received and a second content different from the first content.

2. The display device as claimed in claim 1, wherein the input interface is further configured to receive a navigation command and a selection command, and
wherein the controller is further configured to control one of the first content and the second content to be highlighted on the screen, and control the other one of the first content and the second content to be highlighted in response to the navigation command being received, and to control the display to display the highlighted first or second content on an overall area of the screen of the display in response to the selection command being received,.

3. The display device as claimed in claim 1 or 2, further comprising:
a storage (260) configured to store information corresponding to content displayed on the display,
wherein the controller (130) is further configured, in response to the turn-off command being received, to control the storage to store information corresponding to the first content displayed on the display when the turn-off command is received.

4. The display device as claimed in claim 1 or 2, wherein the controller (130) is further configured to set a ranking of preferred content with reference to at least one of:
respective play-back times, and respective number of playbacks for a plurality of content, and
to generate a list of preferred content based on the ranking, and to control the display to display the list of preferred content as the second content.

5. The display device as claimed in anyone of claims 1 to 3, wherein the controller (130) is further configured to set a ranking of preferred content with reference to at least one of respective play-back times and respective number of playbacks for a plurality of content, and select at least one content among the plurality of content as the second content based on the ranking.

6. The display device as claimed in anyone of claims 1 to 3, wherein the controller (130) is further configured to select at least one content different from the first content from among a plurality of predetermined content as the second content.

7. The display device as claimed in anyone of claims 1 to 3 and 6, wherein the first content and the second content respectively comprise one from among: a broadcast channel content, a content played back from a recording medium, an Internet content, a digital versatile disc (DVD) content, a content stored in universal serial bus (USB), and electronic programming guide (EPG) information.

8. The display device as claimed in anyone of claims 1 to 7, further comprising:
a transceiver (240) configured to communicate with an external device,
wherein the controller (130) is further configured to control the transceiver to transmit a graphic image corresponding to the first content to the external device in response to turning on the display according to the turn-on command.

9. A displaying method of a display device, comprising:
displaying (S1610) a first content on a display of the display device;
turning off the display (S1630) in response to a turn-off command (S1620) being input while the first content is displayed;
in response to the turn-on command being input (S1640), turning on the display (S1650); and
displaying (S1660), on a screen of the display, a content including the first content that was displayed when the turn-off command was input and a second content different from the first content on the display.

10. The method as claimed in claim 9, wherein the displaying on the screen of the display said content including the first content and a second content comprises:
highlighting one of the first content and the second content on the screen;
highlighting the other one of the first content and the second content in response to a navigation command being input; and
displaying, in response to a selection command being input, the highlighted first or second content on an overall area of the display.

11. The method as claimed in claim 9 or 10, further comprising:
storing information corresponding to the first content currently displayed on the display in response to the turn-off command being input.

12. The method as claimed in claim 9 or 10, further comprising:
setting a ranking of preferred content with reference to at least one of respective play-back times and respective number of playbacks for a plurality of content; and
generating a list of preferred content according to the ranking of preferred content,
wherein the displaying on said screen of the display said content including the first content and the second content comprises displaying the list of preferred content as the second content.

13. The method as claimed in anyone of claims 9 to 11, further comprising:
setting a ranking of preferred content with reference to at least one of respective play-back times and respective number of playbacks for a plurality of content,
wherein the displaying on said screen of the display said content including the first content and the second content comprises selecting at least one content among the plurality of contents as the second content based on the ranking.

14. The method as claimed in anyone of claims 9 to 11, wherein the displaying on said screen of the display said content including the first content and the second content comprises selecting at least one content different from the first content from among a plurality of predetermined content as the second content.

15. The method as claimed in anyone of claims 9 to 11 and 14, wherein each of the first content and the second content comprises one from among of a broadcast channel content, a content played back from a recording medium, an Internet content, a digital versatile disc (DVD) content, a content stored in universal serial bus (USB), and electronic programming guide (EPG) information.
